# EUROPEAN PATENT APPLICATION

(11) **EP 1 174 702 A1**
(43) Date of publication of application: **23.01.2002**
(21) Application number: 00830515.3
(22) Date of filing: 20.07.2000
(51) Int. Cl.: G01N 1/31

(54) **Automatic equipment for processing microscope slides for colouring biological specimens**

(71) Applicant: Medic SRL, 10018 Pavone Canavese(Torino) (IT)
(72) Inventor: Giodice, Antonio, 10036 Settimo Torinese, Torino (IT)
(74) Representative: Robba, Pierpaolo

(57) **Abstract**

An automatic equipment allows processing microscope slides for staining biological specimens with IFA, IF, immunoperoxidase, immunoistological staining and other techniques entailing procedures of reagent dispensing and microscope slide washing to allow immunological and other reactions. Said equipment comprises a washing and staining group (5) that may comprise either a collecting tray (20) for the residual liquids, a slide holding tray (21) and a sealing tray (22) or, in the alternative, a tray acting as both collecting tray for the residual liquids and slide holding tray and a sealing tray (22). The sealing tray is made to co-operate, under the control of a control unit of the equipment, with an upper face of the slide holding tray (21) in order to define on said face a plurality of reagent application areas and make them liquid-tight with respect to the adjacent areas.

## Description

The present invention relates to automatic equipment for biological assays.

More particularly, the invention concerns an automatic equipment allowing processing of microscope slides for staining biological specimens according to techniques such as IFA (Indirect Fluorescent Antibody), IF (Direct Fluorescent Antibody), immunoperoxidase, immunoistological staining and other techniques entailing procedures of reagent dispensing and microscope slide washing to allow immunological or other reactions.

In many biological assay techniques (e.g. immunofluorescence, istochemistry and immunoistochemistry, etc.), after the specimen to be analysed has been left in contact with suitable chemical or biological reagents on a microscope slide for the incubation time required for a reaction, if any, to occur, a series of washings with water or particular buffers is carried out to clear the reaction areas from the excess of other substances or from links not specific to the reaction and keep only what is of interest for the particular reaction. After the washings, antibodies or chemical or biological substances are dispensed on the reaction areas, which antibodies or substances can be linked (conjugated) with specific markers capable of detecting particular colours or light emissions. That second step is usually named "staining".

Automatic apparatuses for specimen staining are already known that perform the whole sequence of the above operations under computer control. An example is disclosed in WO-A 99/49295.

The staining operation, which requires use of liquid reagents, is a particularly critical step. Actually, there is the need that the reagent applied remains only in the reaction areas of interest and does not spread over adjacent areas. Indeed, on the one hand an uncontrolled spreading could cause contamination of adjacent specimens to be processed with a different reagent; on the other hand, due to such spreading, the concentration in the application point could be insufficient for the desired purposes in view. Now, at the end of the washing, the slides are of course very wet and it is known that, when a liquid is applied over a slide that is not perfectly dry, such a liquid tends to move away form the application point and to spread across the whole slide. Thus, in the absence of suitable countermeasures, the risk of uncontrolled spread at the end of the washing is high.

The document mentioned above discloses a technique in which a liquid film left after the washing is exploited in order to make the staining reagent spread across the whole surface of a microscope slide. The last step of the washing phase is the application of a liquid with desired surface tension properties on the microscope slide and, after having blown the excess liquid away by an air jet so as to leave only a film of the liquid, the reagent is applied, said reagent being supplied by a delivery head according to a suitable path. Contamination of adjacent slides is prevented by using slide seats defined by walls projecting from the surface of the slide holding tray.

Of course, such a teaching cannot be used in case of slides having several wells for the specimens or of slide holders that do not have such separation of the slide seats. In that case, after the washings, the slide surfaces should be perfectly dried and this would considerably lengthen the analysis time. Moreover, the prior art solution requires use of a liquid with particular surface tension properties.

According to the invention, an equipment for specimen staining is provided that can be used also in case of slides with several specimen-bearing wells or slides of which the seats are not defined by walls projecting from the slide holding tray, and that requires neither drying the slide surface before applying the staining agent, nor the use of liquid with particular surface tension properties.

The equipment is characterised in that it comprises a washing and staining group including a slide holding tray and comprising sealing means capable of co-operating, during reagent application steps following washing steps and under the control of a control unit of the equipment, with an upper face of said slide holding tray in order to define on said face a plurality of reagent application areas that can be accessed by reagent dispensing means according to a predetermined sequence, and to make each said area liquid-tight with respect to adjacent areas.

For a better understanding reference is made to the accompanying drawings, which show some embodiments of the invention, given by way of non limiting example and in which:
- Fig. 1 is an overall perspective view of a staining equipment in accordance with the present invention;
- Fig. 2 is an exploded view of the washing and staining group;
- Fig. 3 is a view on enlarged scale of the washing and staining group, in operating condition;
   Fig. 4 is a top perspective view of the collecting tray for the residual liquids;
- Fig. 5 is a bottom perspective view of the slide holding tray;
   Fig. 6 is a bottom perspective view of the sealing tray;
   Fig. 7 is a partial perspective view of a variant of the sealing tray; and
   Figs. 8 to 12 schematically show other variants.

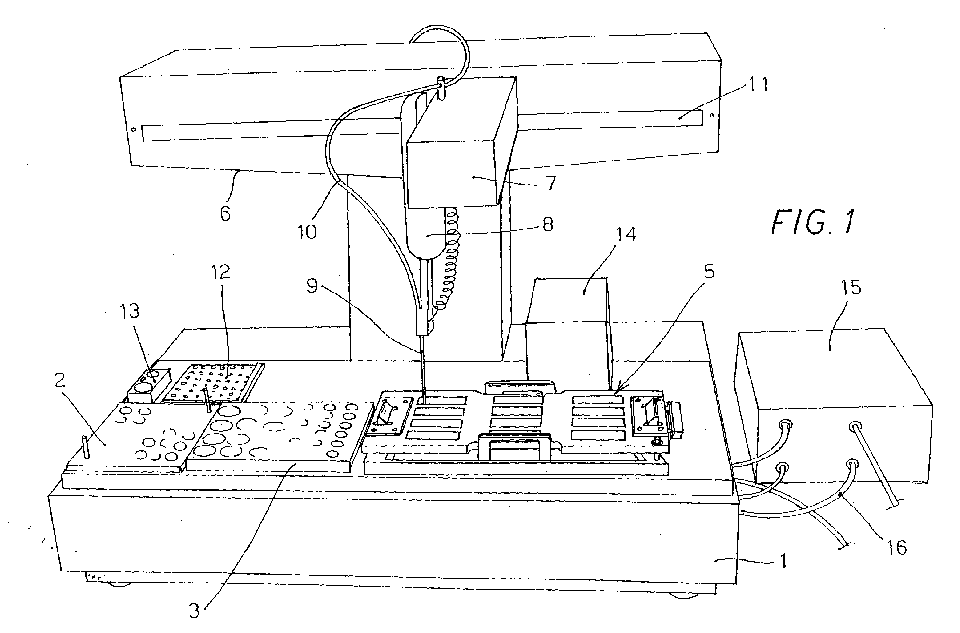

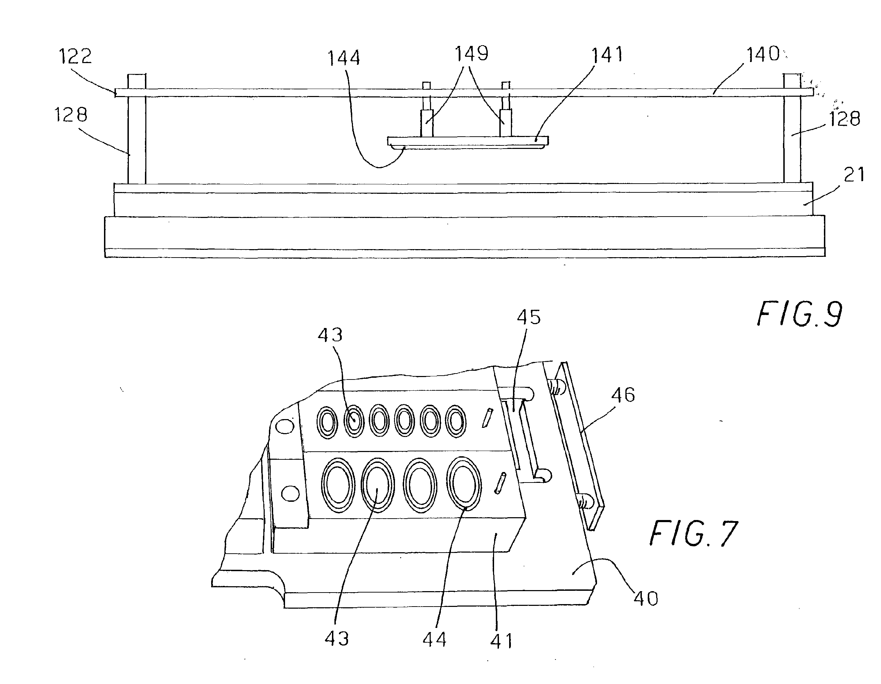

Referring to Fig. 1, an equipment for staining biological specimens comprises a base 1 onto which there are mounted, in suitable positions, a specimen holding tray 2, a reagent holding tray 3, possible test tube holders (not shown in the drawing) and a specimen washing and staining group 5. That group is the specific subject matter of the invention and it will be disclosed in greater detail hereinbelow. A pump 15, connected to the washing and staining group 5 through a tubing 16, controls the supply of the washing liquids and the discharge of the washing products. Different embodiments of said group will be disclosed with reference to Figs. 7 to 12.

Base 1 has associated therewith a turret 6 which carries a slidably mounted head (here shown as comprising two parts 7, 8) bearing a needle 9 for taking specimens and samples from the respective trays 2, 3 and dispensing them on the slides as required by the particular assay to be carried out. Reference 10 denotes the supply tube for needle 9. Head 7, 8 allows displacement of needle 9 along three perpendicular axes. E. g. part 7 can slide along a horizontal guide 11 in the upper part of turret 6, and part 8 can slide in a horizontal direction perpendicular to the preceding one and in vertical direction. Movement of arm 7 and head 8 is obtained in quite conventional manner (e.g. through chains, belts, racks and so on, driven by suitable motors) and are controlled by a control computer (not shown) of the equipment, according to a suitable program.

Base 1 can also house microwell plates 12 intended to bear specimens to be submitted to immunoenzymatic assays, like ELISA (Enzyme-Linked Immunosorbent Assay) test, the dilution test tube holders 13 and a washing and reading station 14 for such assays. In this manner, by suitably programming the control computer, the equipment can carry out both the slide staining required for instance by immunofluorescence techniques, and tests like the ELISA test.

The whole equipment can be closed by a hood, not shown.

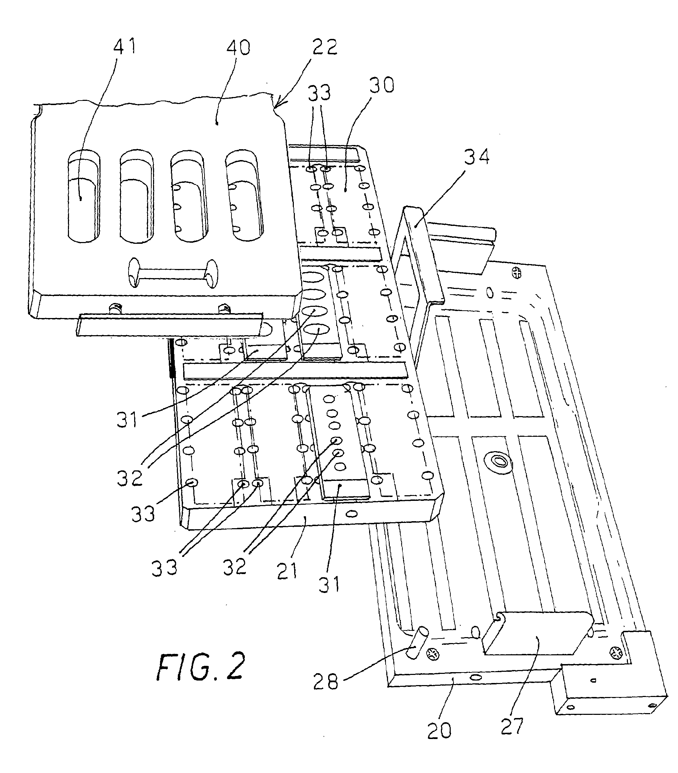

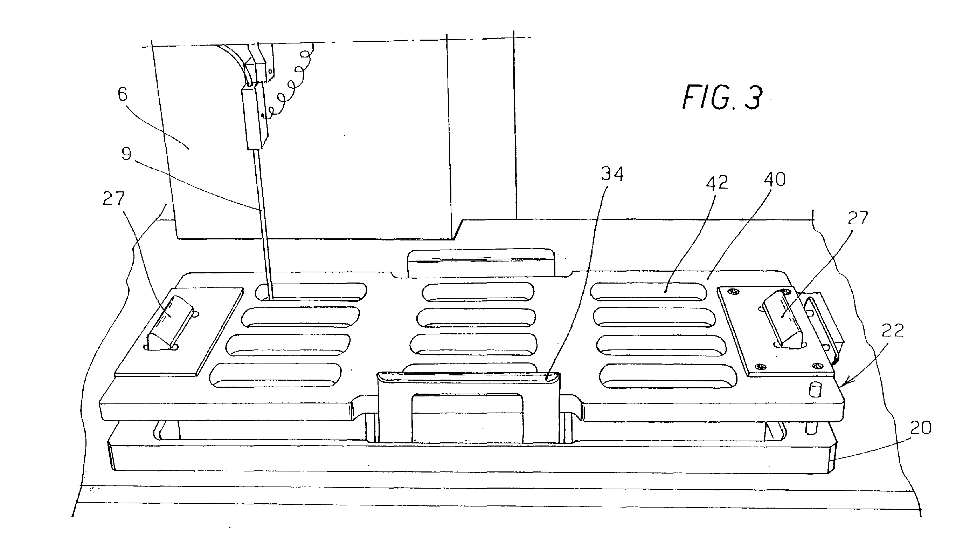

Referring to Figs. 2 to 7, the washing and staining group 5 essentially comprises three components: a tray 20 for collecting the residual liquids, a slide holding tray 21 and a sealing tray 22. Slide holding tray 21 is placed within the internal cavity of residual liquid collecting tray 20, and sealing tray is mounted so as to be lowered towards the slide holding tray 21 and to tightly adhere to the upper surface thereof during the steps of staining reagent application after washing. The means for displacing sealing tray 22 are described below.

The internal cavity of residual liquid collecting tray 20 has holes 24, 25, 26 on its bottom and its edges for the supply and the discharge of the washing liquid, according to the requirements of the particular assay, and for the discharge of liquid reagents coming from slide holding tray 21. Preferably filling and emptying are carried out by pumps (like pump 15 in Fig. 1) through tubing (like tubing 16 in Fig. 1) which is connected to said holes in the bottom face of said tray. Filling and emptying can also occur by gravity. Residual liquid collecting tray 20 is associated with a liquid level detector 29 intended to automatically stop the supply with liquids when the liquids reach a predetermined level, in particular a level such as to cover the slide holding tray 21.

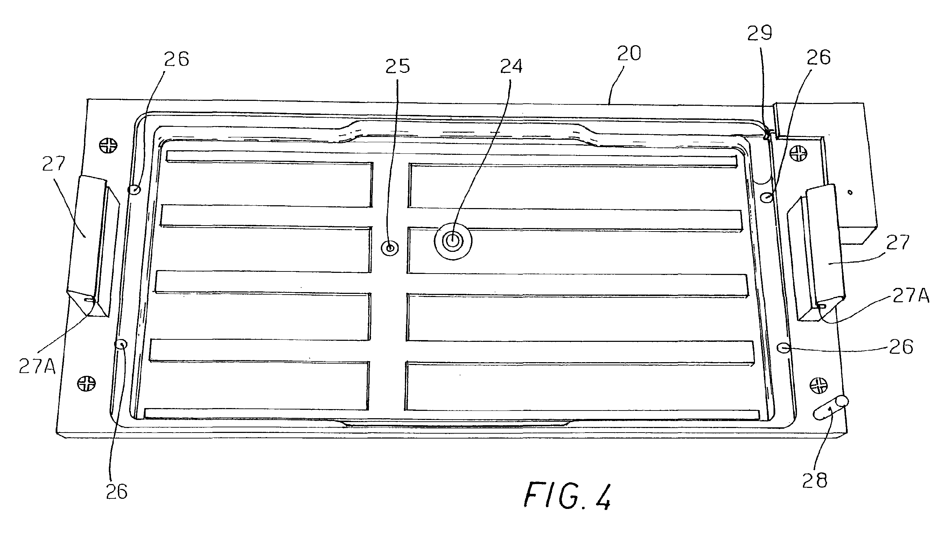

Tray 20 also has, on two opposite sides, traction hooks 27 intended to retain the sealing tray 22. Such hooks 27 are connected with suitable devices (which cannot be seen, since they are located below tray 20), which make the hooks slide downwards when the seal between sealing tray 22 and slide holding tray 21 is to be obtained. Downwards movement of hooks 27 can be obtained e.g. by means of a cam shaft driven by a small motor, or by means of hydraulic or pneumatic pistons, pinion and rack systems, and so on. An upwards projecting pin 28 is provided at a corner of the collecting tray for the residual liquids and is intended to co-operate with a hole of sealing tray 22, as clearly shown in Fig. 3, to make mounting thereof on tray 20 easier.

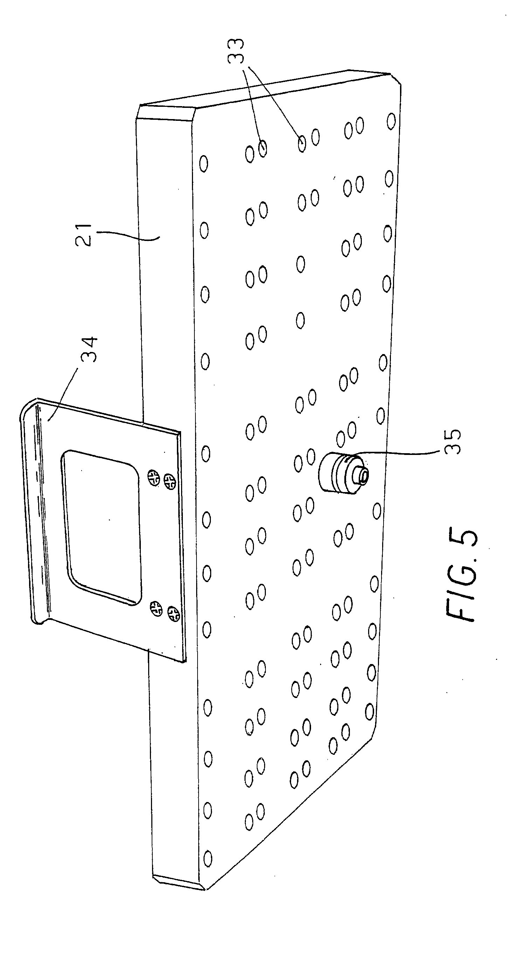

Slide holding tray 21 has on its upper face a plurality of seats 30, each intended to receive a specimen holding slide 31. In the embodiment shown in Figs. 2 to 7, the seats are shallow hollows (for instance, some tenth of a millimetre deep) and have a width and a length slightly exceeding the width and length of slides 31. Advantageously, slides 31 can have each several wells 32 for the specimens. Moreover, as shown also in Fig. 5, slide holding tray 21 has a plurality of throughholes 33, arranged around each seat 30, to make liquids pumped in the residual liquid collecting tray 20 pass to the upper face of slide holding tray 21, and to make excess liquid reagents and washing products flow away towards tray 20. Slide holding tray 21 is equipped with handles 34 allowing an easy handling by an operator. Moreover, a connecting sleeve 38 projects from its bottom face and is arranged to engage the central hole 34 of tray 20.

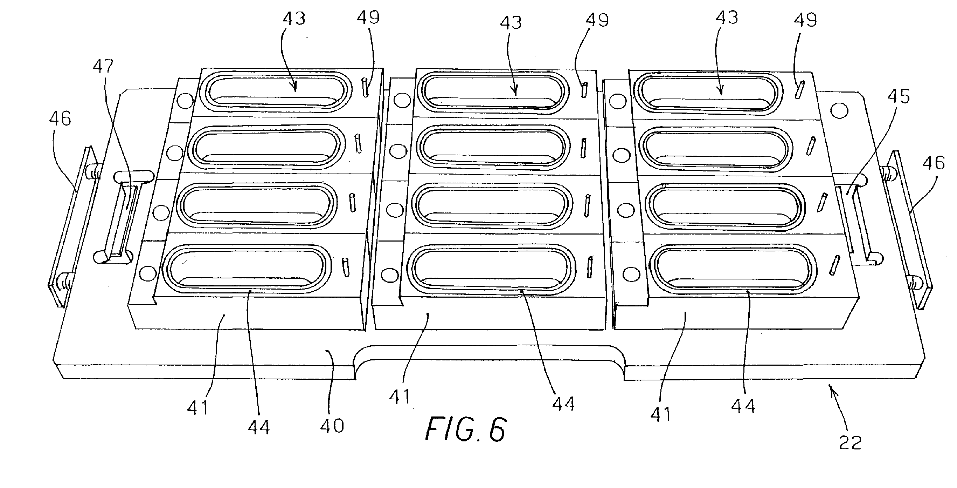

As clearly shown in Fig. 6 and 7, sealing tray 22 comprises a plate 40 the bottom face of which carries sealing members 41. Plate 40 has openings 42 for the passage of dispensing needle 9, and sealing elements 41, that in this embodiment are box members fastened to plate 40, have openings 43 in register with openings 42. Openings 42, 43 allow defining reagent application areas on slides 31. A sealing member 41 for each reagent application area (hence, a member with a single opening 43) or sealing members 41 having the openings corresponding with several reagent application areas could be provided. A single member 41 may also be envisaged. In Fig. 6, the positions, shape and size of openings 42, 43 substantially correspond with those of a slide 31. Yet, openings defining reagent application areas corresponding to a plurality of slides 31, or openings defining reagent application areas corresponding to a slide portion (e. g. openings associated with each well 32, as shown in Fig. 7) could be provided.

Each opening 43 is equipped with a gasket 44 extending along the whole opening periphery and ensuring seal against the surface of slide holding tray 21 (or the surface of a slide 31) when the sealing tray lowered onto slide holding tray 21 by the action of traction hooks 27. Thus, each reagent application area is isolated, as far as passage of liquid is concerned, from adjacent areas in tray 21 or in a slide 31. Thus the homogeneous presence of reagent in each area, without risks of losses and of contamination of adjacent specimens, and hence the correct development of the desired reactions are ensured. Gaskets 44 can be made of rubber, silicone etc.

The short sides of plate 40 have also openings 45 for the passage of traction hooks 27 and, in correspondence with said openings, hooking handles 46 with blades 47 are provided, which are brought e.g. by springs into engagement with grooves 27A (Fig. 4) in traction hooks 27. Handles 46 can then be pulled outwards to disengage blades 47 from hooks 27 and to release tray 22 from residual liquid collecting tray 20. The long sides of sealing tray 22 have on the contrary recesses 48 for the passage of handles 34 (Fig. 5) of the slide holding tray 21.

Sealing members 41 are moreover associated with pins 49, e.g. loaded by springs, arranged to keep slides 31 in position within respective seats 30 when sealing tray 22 is lowered. The correct deposition of the specimens and/or reagents through needle 9 is thus ensured.

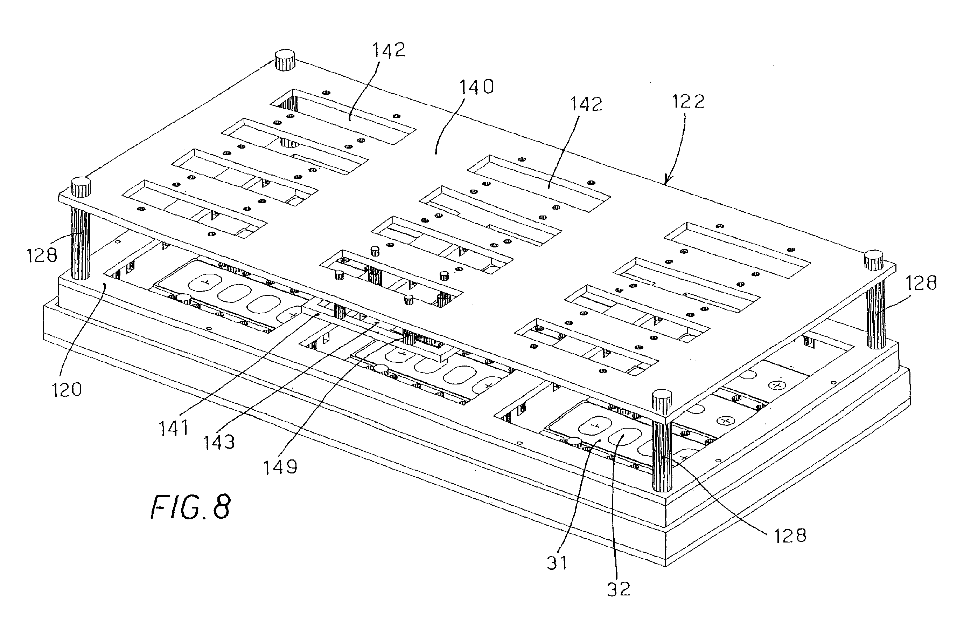

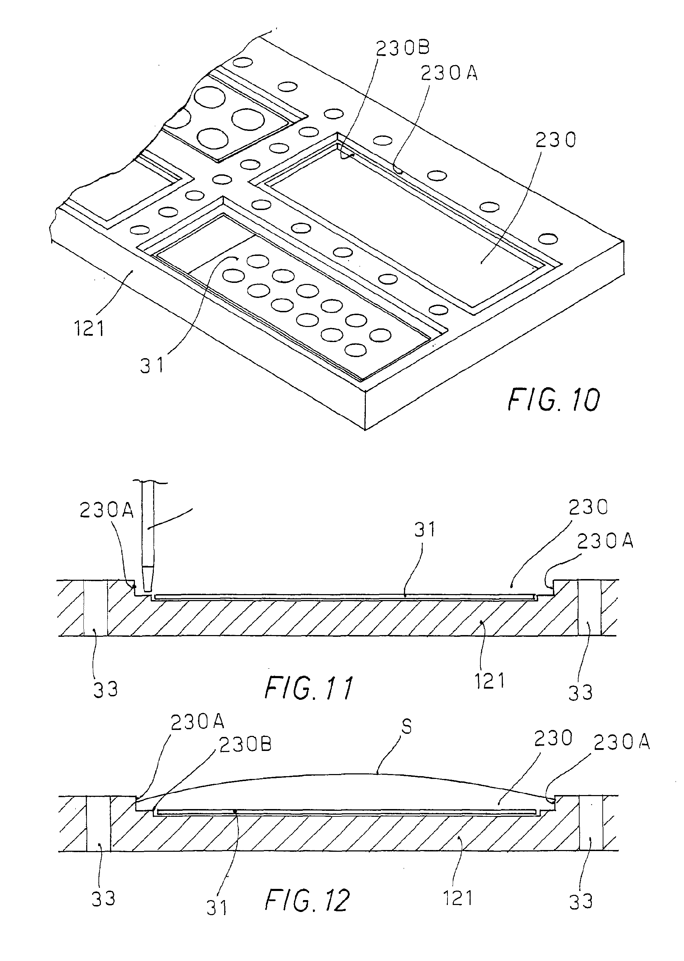

In the variant shown in Figs. 8 and 9, the sealing tray, shown in the whole at 122, still comprises a bearing plate 140 that is mounted on the collecting tray 120 for the residual liquids through pins 128 and is provided with openings 142 similar to openings 42. Openings 142 too can be associated with individual slides, slide groups or slide portions. Sealing plates 141 (only one of which is shown in the drawing) are provided in correspondence with openings 142: plates 141 have a central opening 143 in register with the corresponding opening 142 in bearing plate 140 and a gasket 144 on their bottom face. Each plate 141 is slidably mounted on plate 140 e. g. by means of slidable shaft 149 associated with springs or other thrust-bearing means, not shown in the drawing. The sliding movement will bring the individual plates 141 into contact with an underlying slide located in the slide holding tray.

Sealing member 141 could also be a single plate slidably mounted on bearing plate 140 and provided with a plurality of openings 143 in register with openings 142.

A further variant is shown in Figs. 10 to 12. A slide holding tray 121 is disclosed in which slide seats 230 are hollows obtained in the thickness of slide holding tray 121. In that embodiment no sealing tray is provided, since edge 230A of slide holding tray 121 defines slide seat 230. Preferably such a seat 230 is depressed so as to define a double step 230B, as shown in Fig. 12, thereby effectively keeping the reaction liquid, of which the surface is schematically shown at S in Fig. 12, within seat 230. After washing and draining through holes 33, the liquid stagnating in seat 230 can be sucked away, e. g. by means of dispensing needle 9 or another needle intended for that purpose.

The operation of washing and staining group 5 will now be described, mainly with reference to the embodiment of Figs. 2 to 7. Once all operation parameters have been set in the control computer, the specimens to be analysed (e.g. serums or other biological liquids) are placed on specimen holding tray 2 (Fig. 1) and microscope slides 31 concerned are placed into the proper seats 30 in slide holding tray 21. Then slide holding tray 21 is placed within residual liquid collecting tray 20 and immediately thereafter sealing tray 20 is positioned and fastened to traction hooks 27 by hooking handles 46, 47. At this point the equipment is ready for carrying out the process requested. Considering for instance the step sequence used in indirect immunofluorescence, the necessary specimen amount, set by the program, is dispensed into wells 32 of slides 31 by means of needle 9. Said amount may be different for different wells 32. The dispensed specimens are let to incubate for the time set and, when incubation ends, pump 15 starts a sequence of cycles of introduction of washing liquid jets into residual liquid collecting tray 20 for eliminating the nonspecific reactions residual and of sucking of the washing products. The liquid passes from tray 20 to slide holding tray 21 through the several holes 33 therein. The liquids, when introduced, flood the whole group until the maximum level allowed by liquid detector 29, thereby mixing and removing the specimens that had been dispensed onto the different slide wells and that become now reaction residuals. When the phase of the repeated flooding and discharge ends, residual liquid collecting tray 20 and slide holding tray 21 are flooded again to allow a very accurate washing of slides 31 by total immersion. Immediately after that latter washing and the sucking of the washing liquids, the traction hooks are made to slide downwards in order to lower sealing tray 22 towards slide holding tray 21 and to make gaskets 44 adhere to the slide holding tray surface. Thus there is created that tightness condition around the slide (or slide group or slide portion) required in order the reagent (typically a conjugated antibody) which will be dispensed onto the slide through needle 9 in the subsequent step does not spread because of the liquid film possibly remaining after the washings. In other words, the tightness just ensures that the reagent supplied in suitable amount so as to cover the whole area defined by each gasket 44 remains within said area for the time needed for the particular analysis, without spreading everywhere in uncontrolled manner, whereby a correct reaction is ensured. Thus the need for an accurate slide drying is avoided. Once the reagent has been applied and the incubation time is over, sealing tray 22 can be lifted by operating hooks 27 in the opposite direction, and a succession of washings is again carried out like in the step subsequent to the first specimen incubation. Once again, the whole system is flooded for the required time for further deep washing. The same process can be repeated, by lowering when necessary the sealing tray, for other procedural steps such as dispensation, incubation and washing of other antibodies, or other reagent etc. The important feature is that the tightly sealed areas are created after each washing and immersion cycle and before applying the fresh liquid reagent.

The procedure is substantially the same in the embodiments of Figs. 8, 9. Plates 141 will be lowered in place of the whole tray 122.

In the embodiments of Figs. 10 and 12, the liquid will be effectively kept by edges 230A of seats 330 in contact with the slide, and hence with specimen, until the subsequent step. In such a variant, after suction through the pumps, sucking the liquid excess from seats 230 and 330 through needle 9 might be necessary.

It is evident that the above description is given only by way of non limiting example, and that further variants and modifications are possible without departing from the scope of the invention.

## Claims

1. An automatic equipment for the washing of biological specimens and the subsequent application of liquid reagents to said specimens, in particular for specimen staining, the equipment comprising holders (2, 3) for the specimens and the reagents, means (7, 8, 9) for taking the specimens and the reagents from the respective holders (2, 3), dispensing the specimens to predetermined positions on microscope slides (31) placed in a slide holding tray (21; 221; 321), and dispensing the reagents to the specimens on the slides (31), means (15, 16) for supplying specimen washing liquids and removing used washing liquids, and a control unit for controlling the sequence of the operations of specimen taking and deposition, washing and reagent application, **characterised in that** said slide holding tray (21; 221; 321) is included in a washing and staining group (5) comprising sealing means (22; 122; 144) capable of cooperating, during reagent application steps following washing steps and under the control of said control unit of the equipment, with an upper face of said slide holding tray (21; 221; 321) in order to define on said face a plurality of reagent application areas that can be accessed by the reagent dispensing means (9) according to a predetermined sequence, and to make each said area liquid-tight with respect to adjacent areas.

2. An equipment as claimed in claim 1, **characterised in that** said sealing means (22; 122; 144) are arranged to define, on said slide holding tray (21; 221; 321) reagent application areas corresponding each with a microscope slide (31).

3. An equipment as claimed in claim 1, **characterised in that** said sealing means (22; 122) are arranged to define, on said slide holding tray (21) reagent application areas corresponding with individual wells (32) of a same microscope slide (31).

4. An equipment as claimed in claim 1, **characterised in that** said sealing means (22; 122) are arranged to define, on said slide holding tray (21; 221; 321) reagent application areas corresponding with a plurality of microscope slides.

5. An equipment as claimed in any of claims 1 to 4, **characterised in that** said sealing means (22) comprise:
- a plate (40) having openings (42) for the passage of reagent application means (9), each opening corresponding with one of said reagent application areas;
- at least a sealing member (41) rigidly connected to a bottom face of said plate (40) and provided with openings (43) that are each in register with an opening (42) of said plate, each said opening (43) in the sealing member being equipped with a sealing gasket (44) along its whole periphery.

6. An equipment as claimed in claim 5, **characterised in that** said sealing means (22) comprise a sealing member (41) for each reagent application area.

7. An equipment as claimed in claim 5, **characterised in that** said at least one sealing member (41) has a plurality of openings (43) with respective gaskets (44) and is associated with a plurality of reagent application areas,

8. An equipment as claimed in any of claims 5 to 7, **characterised in that** said sealing means (22) are associated with means (49) for keeping the slides (31) in place within respective seats (30) in the slide holding tray (21).

9. An equipment as claimed in claim 1 or 2, **characterised in that** said slides (31) are arranged in seats (230) formed by hollows obtained in the thickness of the slide holding tray (121).

10. An equipment as claimed in claim 9, **characterised in that** said seats (230) are depressed so as to define a peripheral edge (230A) sufficient to effectively keep the reaction liquid within said seats (230).

11. An equipment as claimed in claim 10, **characterised in that** said peripheral edge (230A) is shaped so as to define a double step (230B).

12. An equipment as claimed in any of claims 1 to 4, **characterised in that** said sealing means (22) comprise:
- a plate (140) having openings (42) for the passage of the reagent application means (9), each opening corresponding with one of said reagent application areas;
- a plurality of sealing members (141) each comprising a small plate with a central opening (143) in register with an opening (142) in said plate (140) and equipped with a sealing gasket (144) along its whole periphery, said sealing members (141) being mounted so as to be vertically slidable relative to said plate (140).

13. An equipment as claimed in any preceding claim, **characterised in that** said specimen washing and reagent application group (5) comprises translation means (27, 27A, 45, 46), controlled by said control unit of the apparatus, for moving said plate (40; 140; 240) by a downward vertical translation movement to obtain the tight seal with the surface of said slide holding tray (21; 221; 321) in view of the reagent application, and for lifting again the plate away from said surface when said application ends.

14. An equipment as claimed in any preceding claim, **characterised in that** said specimen washing and reagent application group (5) further comprises a collecting tray (20; 120) for the residual liquids, which is connected to said means (15, 16) for supplying and removing washing liquids and which houses said slide holding tray (21; 221; 321) and bears said plate (40; 140) of said sealing means.

15. An equipment as claimed in claim 14, **characterised in that** said collecting tray (20) for the residual liquids is equipped with means (29) for detecting the level of washing liquids, arranged to stop supply of washing liquids when the liquids have reached a predetermined level.

16. An equipment as claimed in claim 15, **characterised in that** said means (29) for detecting the level of washing liquids are arranged to stop supply of washing liquids when such liquids have covered said slide holding tray (21; 221; 321).

17. An equipment as claimed in any of claims 14 to 16, **characterised in that** said slide holding tray (21; 221; 321) has a plurality of throughholes (33) for letting washing liquids pass from the collecting tray (20; 120) for the residual liquids to the upper surface of said tray and for discharging used washing liquids towards said collecting tray (20; 120).

18. An equipment as claimed in any preceding claim, **characterised in that** it is arranged to perform both the microscope slide staining required by immunofluorescence techniques, and test like the ELISA test.
